# EUROPEAN PATENT SPECIFICATION

(11) **EP 1 965 174 B1**
(45) Date of publication and mention of the grant of the patent: **27.05.2020**
(21) Application number: 08102092.7
(22) Date of filing: 27.02.2008
(51) Int. Cl.: G01C 23/00, G06F 3/041, G06F 3/048

(54) **Stimuli-sensitive display screen with consolidated control functions**
Stimulus-empfindlicher Anzeigebildschirm mit konsolidierten Steuerfunktionen
Écran d'affichage sensible aux stimuli doté de fonctions de contrôle consolidées

(30) Priority: 28.02.2007 US 680418
(43) Date of publication of application: 03.09.2008
(73) Proprietor: Honeywell International Inc., Morris Plains, NJ 07950 (US)
(72) Inventor: Grothe, Steven P., Cave Creek, AZ 85331 (US)
(74) Representative: Houghton, Mark Phillip

(56) References cited:
- US-A- 5 592 198
- US-A- 6 072 473
- US-A- 6 112 141
- US-B1- 6 236 913
- US-B1- 6 784 869
- US-B2- 6 988 246

## Description

### BACKGROUND

### Technical Field

This disclosure relates generally to display screens, and more particularly to a stimulisensitive display screen with consolidated control functions.

### Description of the Related Art

Flight control system design continues to evolve towards the socalled "glass cockpit" model, where control functions for the aircraft and aircraft subsystems are increasingly displayed and manipulated using MultiFunction Displays (MFDs). As flat panel technology matures, the MFDs are becoming ever larger and expanding into all of the available cockpit space. In such an environment, it is desirable for pilots to rapidly manipulate data displayed on the MFDs or to input data while maintaining their primary focus on operating the aircraft safely. In such an environment, it is also desirable to consolidate other control functions that conventionally use dedicated hardware into the MFD in order to create space and to allow for tailored configurations that reduce pilot workload and reduce cost. Example embodiments address these concerns and may also address other unspecified concerns that are nevertheless present in the related art.

United States Patent Publication No. US 6784869 describes a cursor control display having a pair of cursor control devices each having a group of display selector switches. The switches are used to select the CCD cursor to specific displays for use from each CCD.

### SUMMARY

The present invention is defined by the appended claims.

### BRIEF DESCRIPTION OF THE DRAWINGS

Example embodiments are described in further detail below with reference to the following drawings, in which:
FIG. 1 is a front aspect diagram illustrating some components of an MFD and a possible display layout on the MFD according to an example embodiment.
FIG. 2 is sectional diagram further illustrating the relationship of the components shown in FIG. 1.
FIGS. 3, 4, and 5, are top, side, and rear perspective diagrams, respectively, which further illustrate the handrest of the MFD in FIG. 1 according to an example embodiment.
FIGS. 6 and 7 illustrate example flight data displays according to an example embodiment.
FIG. 8 illustrates a virtual touchkey array according to an example embodiment
FIG. 9 is a block diagram that is representative of some components of a flight control system according to an example embodiment.
FIG. 10 is a flow diagram illustrating some example processes that are included in a method according to an example embodiment.

### DETAILED DESCRIPTION

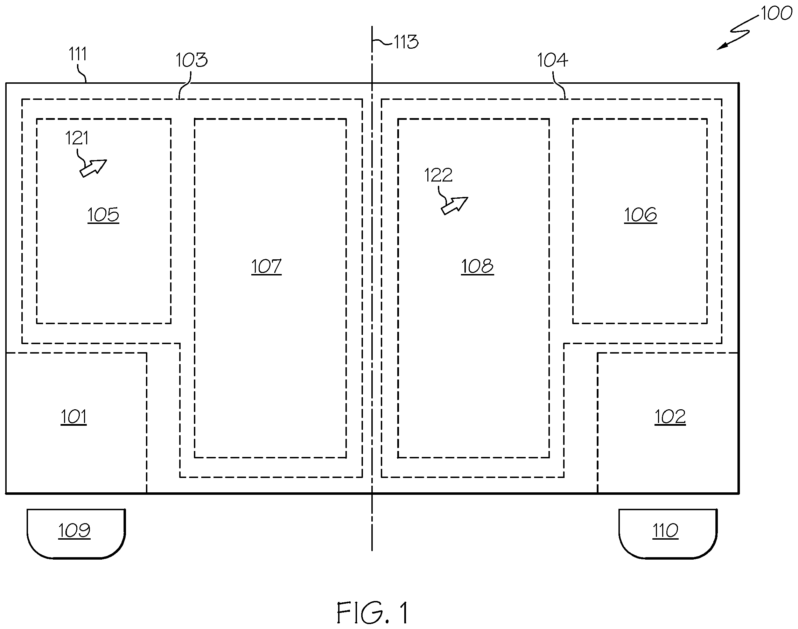

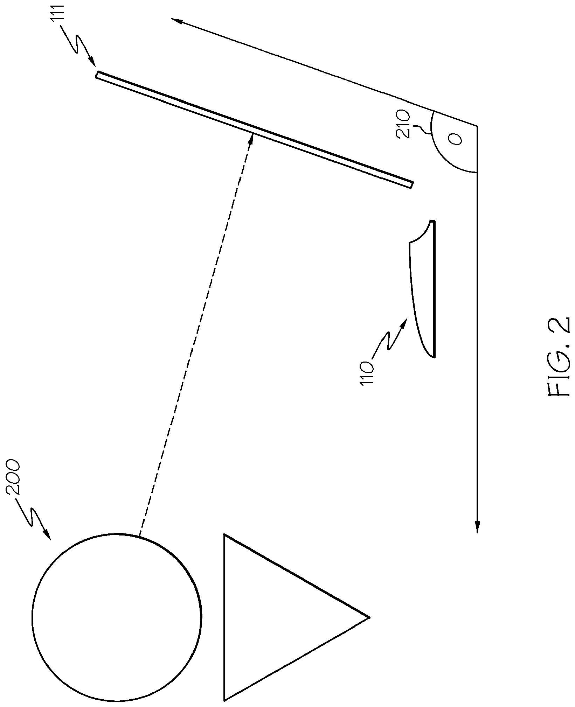

FIG. 1 is a front aspect diagram illustrating some components of an MFD 100 and a possible display layout on the MFD according to an example embodiment. FIG. 1 is from the perspective of a pilot seated facing the front of the MFD 100. FIG. 2 is sectional diagram further illustrating the relationship of the components shown in FIG. 1. FIG. 2 is a cross-section along a plane that is parallel to the line 113 of FIG. 1.

As shown in FIGS. 1 and 2, the MFD 100 includes a stimuli-sensitive display screen 111, a first handrest 109, and a second handrest 110. To increase clarity, other cockpit structures such as the pilot's seat and bulkheads, which support the handrests 109, 110 and the stimuli-sensitive display screen 111, are not shown. As illustrated in FIG. 2, a relative position of a pilot 200 is facing the stimuli-sensitive display screen 111. Those of ordinary skill will appreciate that the pilot's seat may be manipulated so that the pilot is seated at a desired distance from the sensitive display 111 and the handrest 110. According to an example embodiment, the pilot 200 may comfortably place the palm of her hand on top of the handrest 110. The handrest 110 is close enough to the screen such that a finger of the hand that is resting on the handrest can be manipulated to contact the stimuli-sensitive display screen 111. According to an embodiment, the location of the handrest 110 relative to the stimuli-sensitive display screen 111 may be adjusted so that a comfortable position may be found for people having different sized hands and fingers.

An angle 210 exists between the handrest 110 and the stimuli-sensitive display screen 111. The exact value of the angle 210 depends upon the structures used to support the handrest 210 and the stimuli-sensitive display screen 111. According to some embodiments, the value of the angle 210 may range from about 90 degrees to about 180 degrees. Since a more obtuse angle is generally more ergonomically comfortable than a less obtuse angle, in presently preferred embodiments the angle 210 is greater than about 135 degrees, and more preferably, the angle is about 180 degrees.

For purposes of this disclosure, a stimuli-sensitive display screen is defined as a display screen that is capable of outputting visual data and capable of generating a signal in response to a physical manipulation of the display screen or the environment surrounding the display screen. For example, a stimuli-sensitive display screen may be a touch-sensitive display screen that generates a signal in response to a physical touching of a region of the display screen, a proximity-sensitive display screen that generates a signal in response to an object in proximity to a region of the display screen, or a light-sensitive display screen that generates a signal in response to optical radiation striking a region of the display screen.

The stimuli-sensitive display screen 111 may itself be part of a number of different display devices that generate visual output on the stimuli-sensitive display screen using one of many different technologies. For example, the stimuli-sensitive display screen 111 may be part of a color Cathode Ray Tube (CRT) display device, a monochromatic CRT display device, a flat panel display device, a Liquid Crystal Display (LCD) device, a plasma display device, an electro-luminescent display device, a Light Emitting Diode (LED) display device or the like. Detailed functional descriptions of these identified examples of stimuli-sensitive display screens or display devices, or for that matter stimuli-sensitive display screens or displays that were not identified, are not necessary at this point as they can be found elsewhere in the literature and are not required for an understanding of example embodiments.

As shown in FIG. 1, the stimuli-sensitive display screen 111 has a number of regions or areas that are indicated by dashed or dotted lines. In the example embodiment, the shape of the stimuli-sensitive display screen 111 is symmetric about an axis 113 that bisects the stimuli-sensitive display screen into a left region on the left-hand side of the axis 113 and a right region on the right-hand side of the axis 113. In the example embodiment, the areas 101, 103, 105, 107 are symmetric with the areas 102, 104, 106, and 108, respectively.

According to the example embodiment, the areas 103 and 104 are areas of the stimuli-sensitive display screen 111 that are designated for displaying one or more avionics displays. For purposes of this disclosure, an avionics display is any arrangement of visual data that is used for control, monitoring, or data entry for an aircraft or an aircraft subsystem. For example, an avionics display may be one that shows the primary flight displays such as altimeter and heading, or an avionics display may be one that indicates the fuel status of the aircraft or cabin pressure within the aircraft. Another avionics display may include both the primary flight displays and the fuel status of the aircraft. Another avionics display may include navigation (NAV) or communication (COM) functions, such as radio tuning and control. These are just a few examples of the multitude that exist, and an exhaustive description of every possible sort of avionics display is not necessary for an understanding of the example embodiments.

According to the example embodiment, the areas 103 and 104 are also areas of the stimuli-sensitive display screen 111 that are operable to display the cursors 121, 122 respectively. As illustrated in FIG. 1, the cursors 121, 122 are illustrated as arrows, but the shape of the cursor is not particularly important - many alternative shapes are possible. The cursors 121, 122 may be used to select a particular sub-area within the areas 103 and 104. In other words, the cursors can be used to identify a particular portion of an avionics display as the active part of the display. Alternatively, the cursors 121, 122 may be used to select different options in an avionics display that present one or more menu choices or selections for the pilot. The cursors 121, 122 may also be used for data entry purposes. For example, the cursors 121, 122 may be used to select one virtual keypad from a number of virtual keypads that are generated as part of an avionics display. Each of the keypads may have a unique letter or number associated with it.

According to the example embodiment, the areas 101 and 102 are areas of the stimuli-sensitive display screen that can be designated for use as Cursor Control Devices (CCDs). That is, inputs detected in the areas 101, 102 are used to control the movement of the cursors 121, 122 that are displayed in the areas 103, 104. In alternative embodiments, the inputs detected in the areas 101, 102 may be used to control the movement of other cursors in other display areas of the display screen 111.

In other alternative embodiments, the inputs detected in the areas 101, 102 may be used to control the movement of other cursors displayed on a second MFD that is different than MFD 100. In some of these alternative embodiments, the second MFD includes a stimuli-sensitive display screen. In other ones of these alternative embodiments, the second MFD does not include a stimuli-sensitive display screen.

In one example embodiment, inputs detected in area 101 are used to control the movement of the cursor 121 in the area 103, while inputs detected in area 102 are used to control the movement of the cursor 122 in the area 104. According to another embodiment, the cursor 121 is prevented from being displayed in the region to the right of the axis 113, while the cursor 122 is prevented from being displayed in the region to the left of the axis 113. In one example embodiment, the areas 101 and 102 are square areas having sides of approximately two and a half (2.5) inches. This size seems to be convenient, although of course the areas 101 and 102 could have other shapes and sizes.

The configuration for the stimuli-sensitive display screen 111 illustrated in FIG. 1 is just one example. Generally speaking, a stimuli-sensitive display screen may conveniently display a number of different avionics displays in different areas of the display screen. The number is limited only by the maximum size of the display screen and the smallest practically viewable area for each avionics display. The areas for the avionics display may be of different sizes, different shapes, and unlike the embodiment illustrated in FIG. 1, may not be symmetric relative to other display areas.

In some embodiments, the at least one area designated for use as a CCD for a cursor can be dynamically reconfigured in different areas of the stimuli-sensitive display screen according to the wishes of the user of the stimuli-sensitive display screen. That is, different areas of the stimuli-sensitive display screen may be designated for use as the CCD according to the wishes of the user of the stimuli-sensitive display screen. Alternatively, in some situations it may be desirable to not use any portion of the stimuli-sensitive display screen for a CCD. Embodiments are reconfigurable for all situations.

It should be apparent that the MFD 100 is particularly well-suited for cockpit configurations where a pilot and co-pilot are seated side by side. However, other embodiments are not so limited. For example, it is common in specialized test aircraft or aboard large military aircraft for one or more crewmembers located in positions other than the pilot position(s) to monitor or control an aircraft subsystem for purposes of redundancy or independence. According to other embodiments, there may be more or less than the two areas 103, 104 for avionics displays and the two areas 101 or 102 for CCDs, depending on the particular crewstation configuration.

As illustrated in FIGS. 1 and 2, the MFD 100 further includes handrests 109 and 110, which are adapted to work cooperatively with the CCD areas 101, 102, respectively. The handrests 109 and 110 are disposed adjacent to their corresponding CCD areas 101, 102, such that a pilot seated in the left position could place the palm of his right hand on the top of the handrest 109 and use a finger to apply inputs to the CCD area 101 of the stimuli-sensitive display screen 111, while another pilot seated in the right position could place the palm of his left hand on the top of the handrest 110 and use a finger to apply inputs to the CCD area 102 of the stimuli-sensitive display screen 111. In this manner, the two pilots can control their corresponding cursors 121 or 122 and manipulate their corresponding avionics displays in areas 103 and 104 in any manner that is desired. It should be apparent that the avionics displays that are present in area 103 need not be the same avionics displays that are present in area 104.

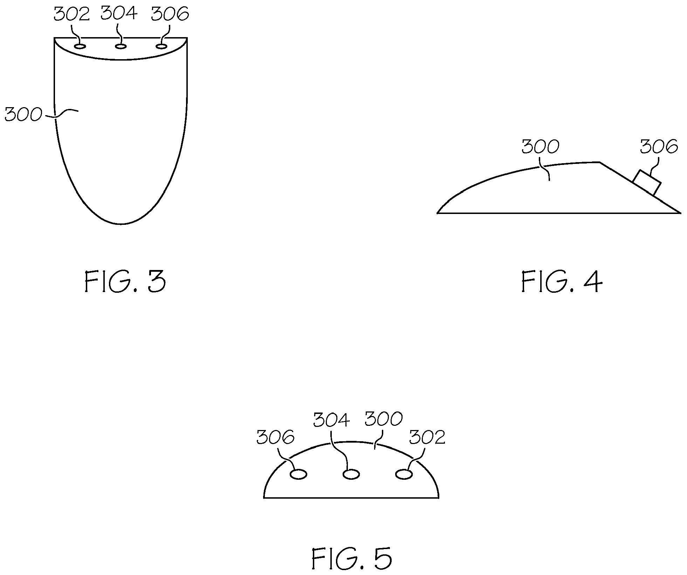

FIGS. 3, 4, and 5, are top, side, and rear perspective diagrams, respectively, that illustrate an example handrest 300 according to an embodiment. The handrest 300 is suitable for use as the handrest 109 or 110 in FIGS. 1 and 2. As illustrated in FIGS. 3-5, the handrest 300 has an ergonomic shape. The handrest 300 further includes buttons 302, 304, and 306. The buttons 302, 304, 306 may be used cooperatively with the cursors 121 or 122 to select or deselect areas of the avionics displays, or choose menu-driven choices that are presented to the pilot in the avionics displays, similar to the way a mouse peripheral and a cursor displayed on a personal computer display screen are used to select, deselect, or choose menu-driven choices. It should be apparent that many different designs for the handrest 300 are possible. For example, in alternative embodiments the handrest may include large push-buttons that are may be manipulated using a thumb. In other embodiments, the handrest may include a trackball that is also operable to control a cursor, which could provide a backup in case the CCD areas 101 or 102 experienced a failure.

Returning to FIG. 1, the area 103 includes the area 105 and 107, while the area 104 includes the area 106 and 108. According to the example embodiment, the areas 105 and 106 are areas of the stimuli-sensitive display screen 111 can be designated for displaying a virtual touchkey array. As was indicated above, virtual touchkeys can be used, in conjunction with the cursors 121, 122, for data entry. Alternatively, because the areas 105, 106 are themselves part of the stimuli-sensitive display screen 111, the touchkeys themselves may be physically contacted to input data. According to an example embodiment, both methods would be available to a pilot.

According to the example embodiment, the areas 107 and 108 are areas of the stimuli-sensitive display screen 111 that are designated to display any avionics display other than the array of virtual touchkeys that are displayed in areas 105 and 106.

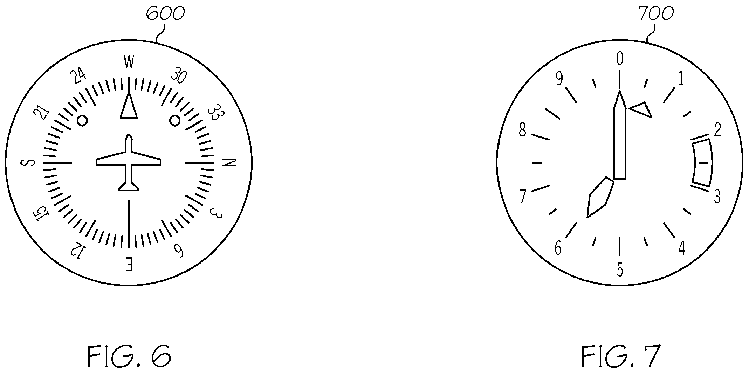

FIGS. 6 and 7 illustrate avionics displays 600, 700 according to an example embodiment. The avionics displays 600, 700 are just two examples of what can be displayed in areas 107 and 108 of FIG. 1. Avionics display 600 is a compass that illustrates the heading of the aircraft. Avionics display 700 is an altimeter that shows the aircraft's elevation above mean sea level. Thus, as was explained above, the avionics displays 600 and 700 would be considered primary flight displays. In the example embodiment, the avionics displays 600 and 700, even though they are generated on a stimuli-sensitive display screen 111, have an appearance that emulates the old-style altimeters and compasses that were implemented with dedicated hardware. Some pilots prefer this look, although of course altimeters or compasses may be implemented in many different ways. For example, an altimeter or compass could be simply implemented in a flight data display as a number whose value reflected the aircraft's current altitude and heading.

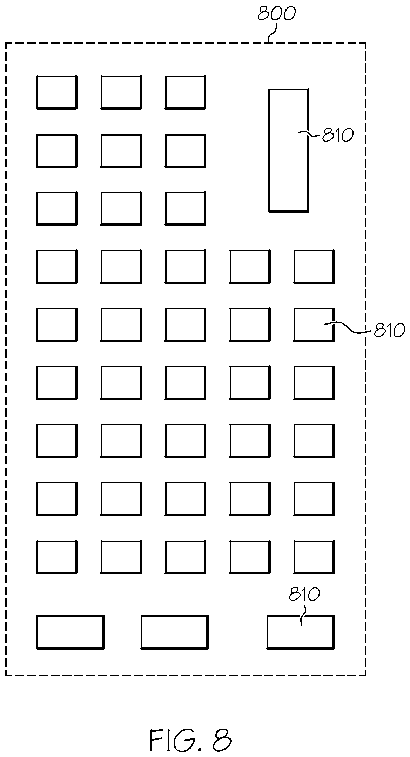

FIG. 8 illustrates a virtual touchkey array 800 according to an example embodiment. The virtual touchkey array 800 includes a number of pushbuttons 810 that are displayed by the stimuli-sensitive display screen 111. Each one of the pushbuttons 810 can be configured to trigger a particular function when the area of the stimuli-sensitive display screen 111 corresponding to the pushbutton 810 is selected using either the cursors 121, 122 and one of the buttons 302, 304, 306 or, alternatively, a direct physical touch to the pushbutton 810.

The stimuli-sensitive display screen 111 is operable to display any combination of letters, words, numbers, or symbols within the pushbuttons 810 that would indicate the function corresponding to a selection of that particular pushbutton. For example, the stimuli-sensitive display screen 111 may display the numbers 0, 1, 2, ..., 8, 9 within a corresponding one of the pushbuttons 810. These pushbuttons 810 may be used for data entry. Within other pushbuttons 810, letter sequences such as NAV, COM, FUEL, etc., may be displayed. These pushbuttons may be used to cause the stimuli-sensitive display screen 111 to display avionics displays associated with NAV, COM, or FUEL functions. In FIG. 8, the pushbuttons 810 are not shown with any particular combination of letter, words, numbers, or symbols to emphasize that the stimuli-sensitive display screen 111 may display any desired combination of letters, words, numbers, or symbols within a pushbutton 810.

The touchkey array 800 is just one example of a configuration of touchkeys that can be generated in areas 105 and 106 of FIG. 1. As was explained above, the touchkey array 800 may be used for data entry. According to some embodiments, the selection of a particular pushbutton 810 may result in the display of a different avionics display in the areas 107 and 108.

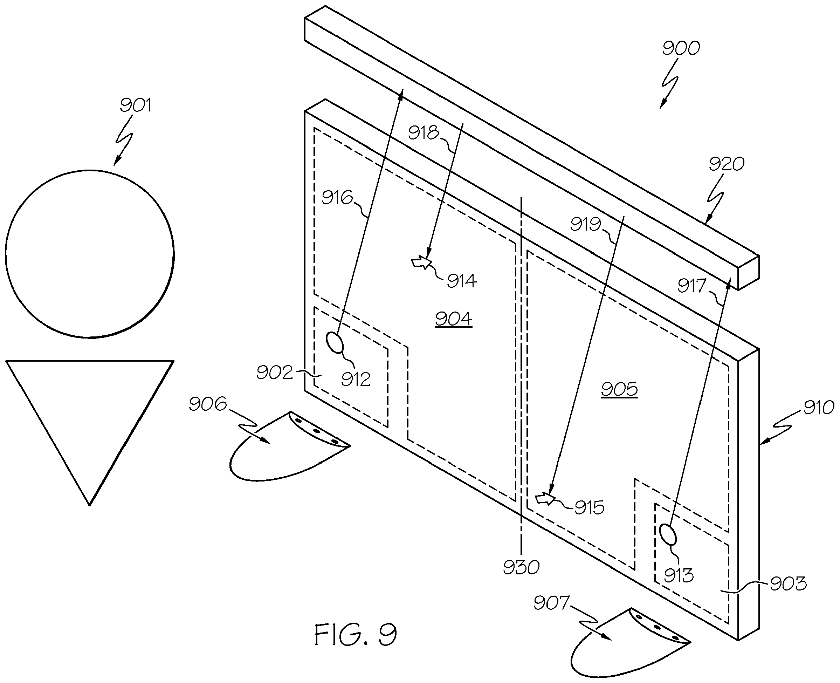

FIG. 9 is a block diagram that is representative of some components of a flight control system 900 according to an example embodiment. The flight control system 900 includes a stimuli-sensitive display screen 910, a processor 920, and two handrests 906, 907 that are disposed adjacent to the areas 902, 903 of the stimuli-sensitive display screen. According to the example embodiment, the stimuli-sensitive display screen 910 and handrests 906, 907 are the same as the stimuli-sensitive display screen 111 and handrests 109, 110 of FIG. 1, and have the same capabilities. Thus, a duplicative description is omitted.

The processor 920 is operable to control the stimuli-sensitive display screen 910 in order to generate one or more avionics displays in the areas 904, 905 as well as generate the cursors 914, 915 in the areas 904, 905, respectively. The processor 920 preferably encompasses one or more functional blocks and can include any number of individual microprocessors, memories, storage devices, interface cards, or other processor components.

According to an example embodiment, the areas 902, 903 of the stimuli-sensitive display screen 910 are operable to generate signals 916, 917 when an input is sensed at locations 912, 913 in the areas 902, 903. Preferably, these inputs are caused by a crewmember 901 (e.g., a pilot or co-pilot) who is attempting to control either the cursor 914 or the cursor 915. The signals 916, 917 are transmitted to the processor 920. The processor 920 generates one or more control signals 917, 918 based upon the signals 916, 917 and these control signals are used to cause different portions of the areas 904, 905 to display the cursors 914, 915. Thus, a crewmember 901 can control a movement of the cursor 914 or a movement of the cursor 915 based upon a physical manipulation (e.g., a touch) of the cursor control areas 902, 903 of the stimuli-sensitive display screen 910.

In some embodiments, the crewmember 901 can also control the movement of the cursor 914 or a movement of the cursor 915 based upon a physical manipulation (e.g., a touch) of the stimuli-sensitive display screen 910 in the area where the crewmember wishes to place the cursor. Of course, in embodiments that use a CCD area of a stimuli-sensitive display screen to control a movement of a cursor in another display screen that is not stimuli-sensitive, this capability would not be available.

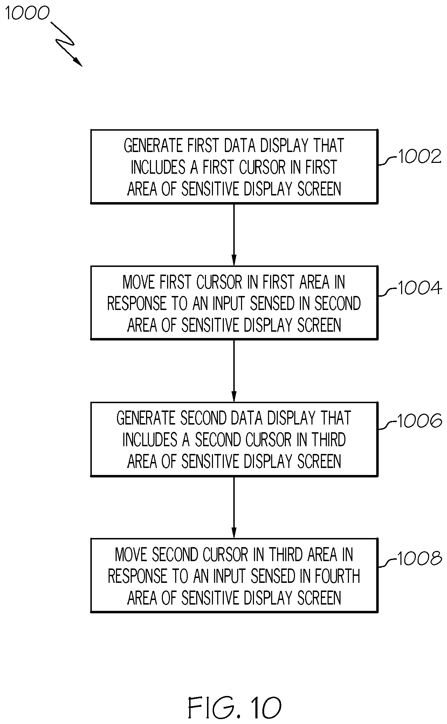

FIG. 10 is a flow diagram illustrating some example processes that are included in a method 1000 according to an example embodiment. In the example embodiment 1000, the method begins in process 1002 and proceeds sequentially through processes 1004, then 1006, and finally 1008. However, not all embodiments are so limited. That is, in some embodiments, processes 1002 and 1006 may occur concurrently, while in other embodiments processes 1004 and 1008 may occur concurrently. Other embodiments may only include a subset of the processes that are included in method 1000.

Example embodiment 1000 begins with process 1002, which includes generating a first avionics display in a first area of a stimuli-sensitive display screen, where the first avionics display includes a first cursor. Next, process 1004 includes moving the first cursor in the first area in response to an input that is sensed in a second area of the stimuli-sensitive display screen. According to an example embodiment, the first area of the stimuli-sensitive display screen may be separate from the second area of the stimuli-sensitive display screen. According to an alternative embodiment, the first avionics display may be generated on a display screen that is different from the stimuli-sensitive display screen.

After process 1004, process 1006 includes generating a second data display in a third area of the stimuli-sensitive display screen, where the second data display includes a second cursor. Finally, process 1008 includes moving the second cursor in the third area in response to an input that is sensed in a fourth area of the stimuli-sensitive display screen.

## Claims

1. An apparatus comprising a stimuli-sensitive display screen (SSD) having:
a shape that is symmetrical about an axis (113) that bisects the screen into a left region on the left-hand side of the axis (113) and a right region on the right-hand side of the axis (113),
a first area (101) in the left region of the SSD designated for use as a first cursor control device and a second area (102) in the right region of the SSD designated for use as a second cursor control device, wherein the first cursor control device is operable to generate a first signal for control of a first cursor (121) in a third area (103) in the left region of the SSD in response to a first input sensed by the first cursor control device and the second cursor control device is operable to generate a second signal for control of a second cursor (122) in a fourth area (104) in the right region of the SSD in response to a second input sensed by the second cursor control device,
wherein the third and fourth areas (103, 104) are designated for the display of visual data, and
wherein the first cursor (121) is disabled from display within the right region of the SSD and the second cursor (122) is disabled from display within the left region of the SSD.

2. The apparatus of claim 1 , further comprising:
a first handrest (109) disposed adjacent to the first area (101) of the SSD; and
a second handrest (110) disposed adjacent to the second area (102) of the SSD, such that a pilot may place a palm on either the first or second handrest and use a finger to apply inputs to either the first or second area, respectively.

## Patentansprüche

1. Vorrichtung, die einen Stimulus-empfindlichen Anzeigebildschirm (SSD) umfasst, die Folgendes aufweist:
eine Form, die um eine Achse (113) symmetrisch ist, die den Bildschirm in einen linken Bereich auf der linken Seite der Achse (113) und einen rechten Bereich auf der rechten Seite der Achse (113) halbiert,
eine erste Fläche (101) in dem linken Bereich des SSD, die zur Verwendung als eine erste Cursorsteuervorrichtung bestimmt ist, und eine zweite Fläche (102) in dem rechten Bereich des SSD, die zur Verwendung als eine zweite Cursorsteuervorrichtung bestimmt ist, wobei die erste Cursorsteuervorrichtung betreibbar ist, um ein erstes Signal zur Steuerung eines ersten Cursors (121) in einer dritten Fläche (103) in dem linken Bereich des SSD als Reaktion auf eine erste Eingabe zu erzeugen, die von der ersten Cursorsteuervorrichtung erfasst wird, und die zweite Cursorsteuervorrichtung betreibbar ist, um ein zweites Signal zur Steuerung eines zweiten Cursors (122) in einer vierten Fläche (104) in dem rechten Bereich des SSD als Reaktion auf eine zweite Eingabe zu erzeugen, die von der zweiten Cursorsteuervorrichtung erfasst wird,
wobei die dritte und die vierte Fläche (103, 104) zum Anzeigen visueller Daten bestimmt sind, und
wobei der erste Cursor (121) von der Anzeige innerhalb des rechten Bereichs des SSD gesperrt ist und der zweite Cursor (122) von der Anzeige innerhalb des linken Bereichs des SSD gesperrt ist.

2. Vorrichtung nach Anspruch 1, ferner Folgendes umfassend:
eine erste Handauflage (109), die benachbart zu der ersten Fläche (101) des SSD angeordnet ist; und
eine zweite Handauflage (110), die benachbart zu der zweiten Fläche (102) des SSD angeordnet ist, sodass ein Pilot eine Handfläche entweder auf die erste oder die zweite Handauflage legen und einen Finger verwenden kann, um Eingaben entweder an der ersten oder der zweiten Fläche zu machen.

## Revendications

1. Appareil comprenant un écran d'affichage sensible aux stimuli (SSD) ayant :
une forme symétrique par rapport à un axe (113) qui divise l'écran en une région de gauche sur le côté gauche de l'axe (113) et en une région de droite sur le côté droit de l'axe (113),
une première zone (101) dans la région de gauche du SSD, désignée pour être utilisée comme premier dispositif de commande à curseur, et une deuxième zone (102) dans la région de droite du SSD, désignée pour être utilisée comme second dispositif de commande de curseur, dans lequel le premier dispositif de commande de curseur peut fonctionner pour générer un premier signal pour la commande d'un premier curseur (121) dans une troisième zone (103) dans la région de gauche du SSD en réponse à la détection d'une première entrée par le premier dispositif de commande de curseur, tandis que le second dispositif de commande de curseur peut fonctionner pour générer un second signal pour la commande d'un second curseur (122) dans une quatrième zone (104) dans la région de droite du SSD, en réponse à la détection d'une seconde entrée par le second dispositif de commande de curseur,
dans lequel les troisième et quatrième zones (103, 104) sont désignées pour l'affichage de données visuelles et
dans lequel le premier curseur (121) est désactivé de l'affichage dans la région de droite du SSD et le second curseur (122) est désactivé de l'affichage dans la région de gauche du SSD.

2. Appareil selon la revendication 1, comportant en outre :
un premier repose-main (109), disposé à côté de la première zone (101) du SSD ; et
un second repose-main (110), disposé à côté de la deuxième zone (102) du SSD, de sorte qu'un pilote puisse placer une paume sur le premier ou sur le second repose-main et utiliser un doigt pour appliquer des entrées à la première ou à la deuxième zone, respectivement.
